# EUROPEAN PATENT APPLICATION

(11) **EP 4 583 627 A1**
(43) Date of publication of application: **09.07.2025**
(21) Application number: 23860806.1
(22) Date of filing: 28.08.2023
(51) Int. Cl.: H04W 76/15, H04W 88/04, H04W 76/14, H04W 76/18, H04W 76/30, H04W 76/11

(54) **DUPLICATION TRANSMISSION METHOD USING MULTIPATH**

(30) Priority: 29.08.2022 US 202263401717 P
(71) Applicant: LG Electronics Inc., Yeongdeungpo-gu Seoul 07336 (KR)
(72) Inventor: KIM, Seokjung, Seoul 06772 (KR); KIM, Laeyoung, Seoul 06772 (KR); YOUN, Myungjune, Seoul 06772 (KR); BYUN, Daewook, Seoul 06772 (KR)
(74) Representative: Mooser, Sebastian Thomas
(86) International application number: PCT/KR2023/012700
(87) International publication number: WO 2024/049130

(57) **Abstract**

One disclosure of the present disclosure provides a method by which a remote UE performs communication. The method comprises the steps of: establishing a first PDU session with a base station; transmitting, to the base station, a message requesting to establish a second PDU session, wherein one of the first PDU session and the second PDU session is for a direct path between the remote UE and the base station and the other one of the first PDU session and the second PDU session is for an indirect path through a PC5 connection with a relay UE between the remote UE and the base station; receiving a response message from the base station, wherein the response message includes an establishment approval message for the second PDU session, the response message includes an indication that a configuration of a disjoint UP path for the first PDU session and the second PDU session has failed, and the disjoint UP path is for duplication transmission through the first PDU session and the second PDU session; releasing the PC5 connection with the relay UE on the basis of the indication; and selecting a new relay UE.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DESCLOSURE

### TECHNICAL PROBLEM

If the disjoint UP path allocation for the PDU session due to multipath fails, the action is problematic.

### TECHNICAL SOLUTION

The direct path/indirect path can be changed through the relay reselection of the remote UE or the path reselection of the NG-RAN, and the disjoint UP path allocation/configuration can be performed again.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIGS. 5 and 6 show an example of a PDU session establishment procedure to which implementations of the present disclosure is applied.
FIG. 7 illustrates an example of redundant user plane paths using dual connectivity.
FIG. 8 illustrates a scenario in which the Direct Path and the Indirect Path are served to the UE via one identical NG-RAN.
FIG. 9 illustrates a scenario in which two different Indirect Paths are served to the UE via one identical NG-RAN.
FIG. 10 illustrates a scenario in which the Direct Path and the Indirect Path are served to the UE via two different NG-RANs.

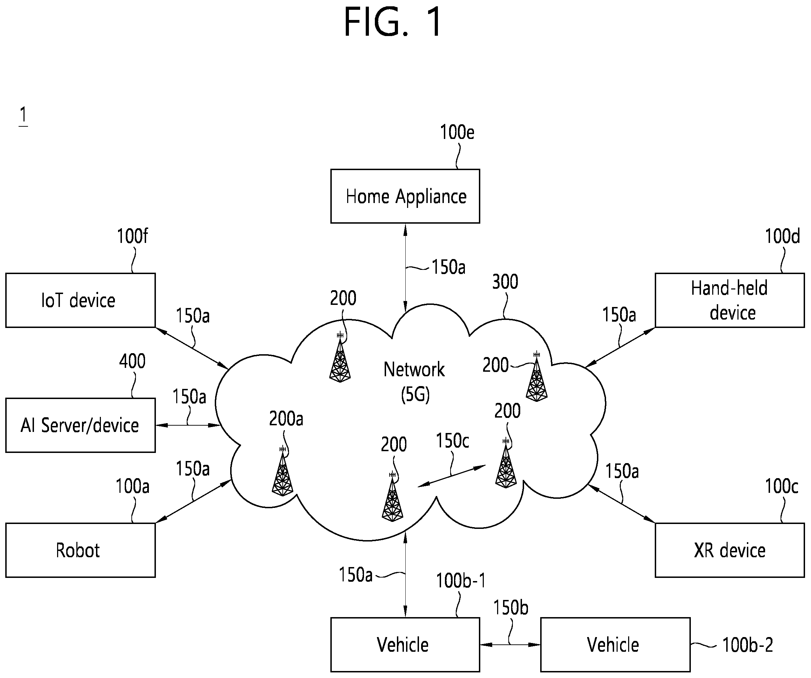

FIG. 1 1 illustrates a scenario in which two different Indirect Paths are served to the UE via two different NG-RANs.

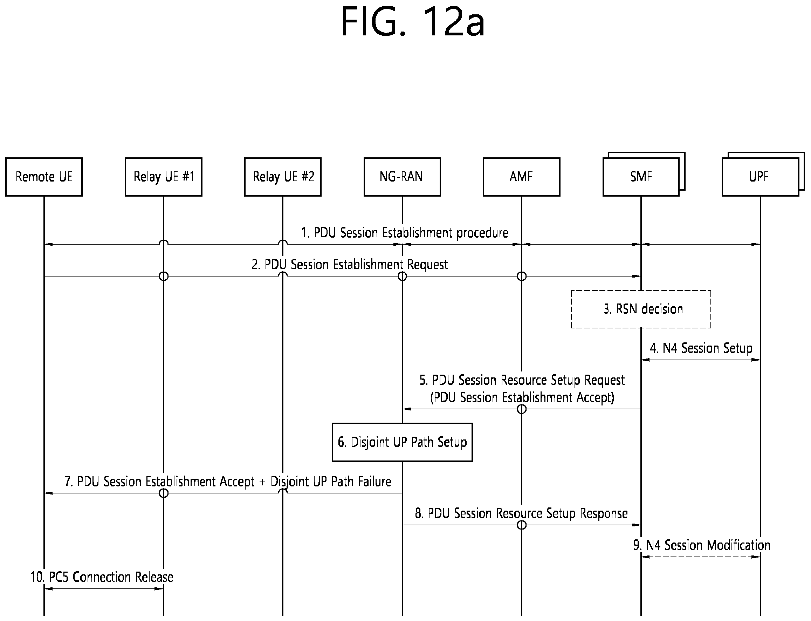

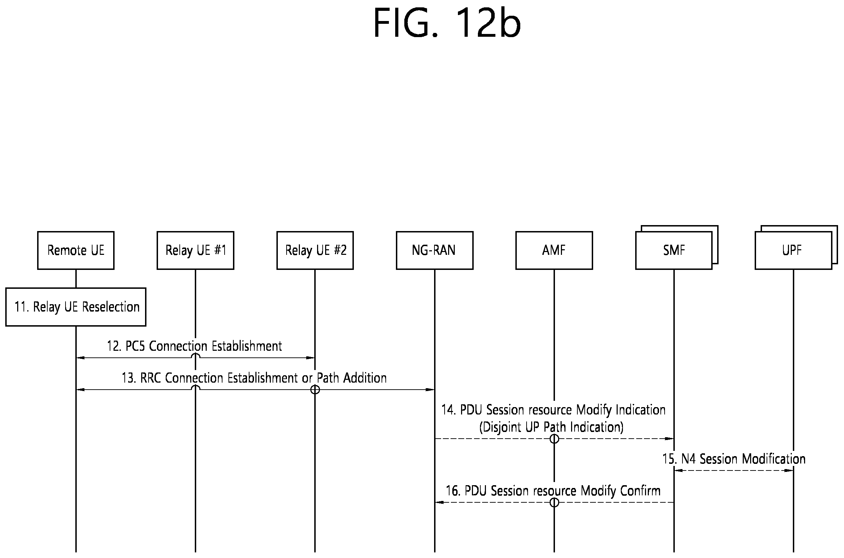

FIGS. 12a and 12b are exemplary diagrams showing a procedure according to the first embodiment.

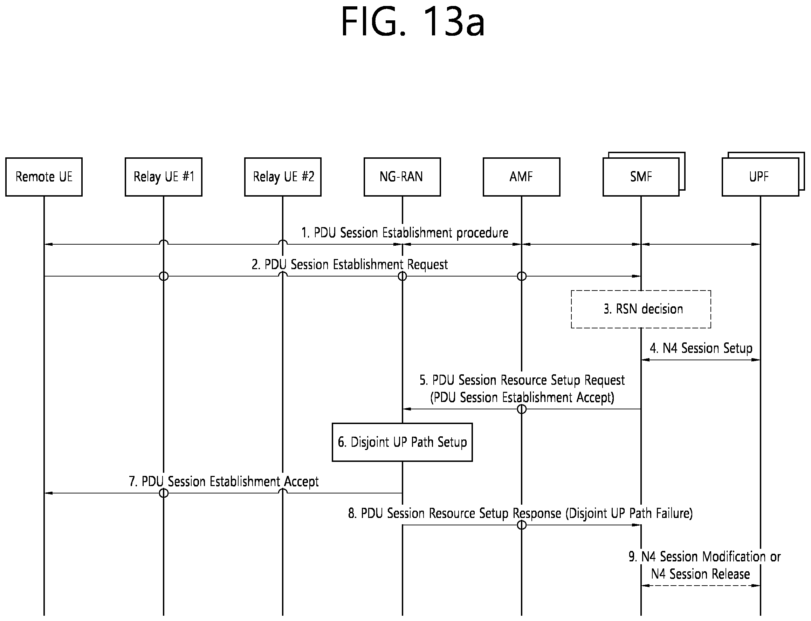

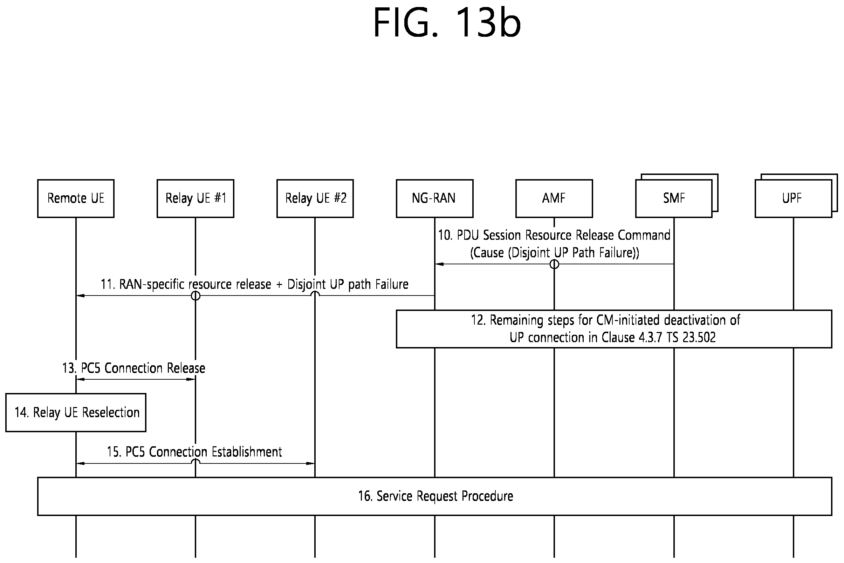

FIGS. 13a and 13b are exemplary diagrams illustrating a procedure according to the second embodiment.

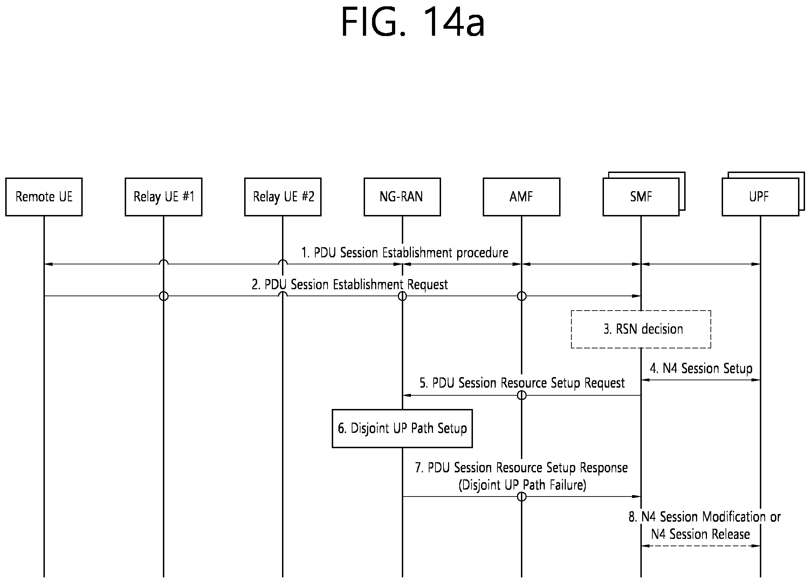

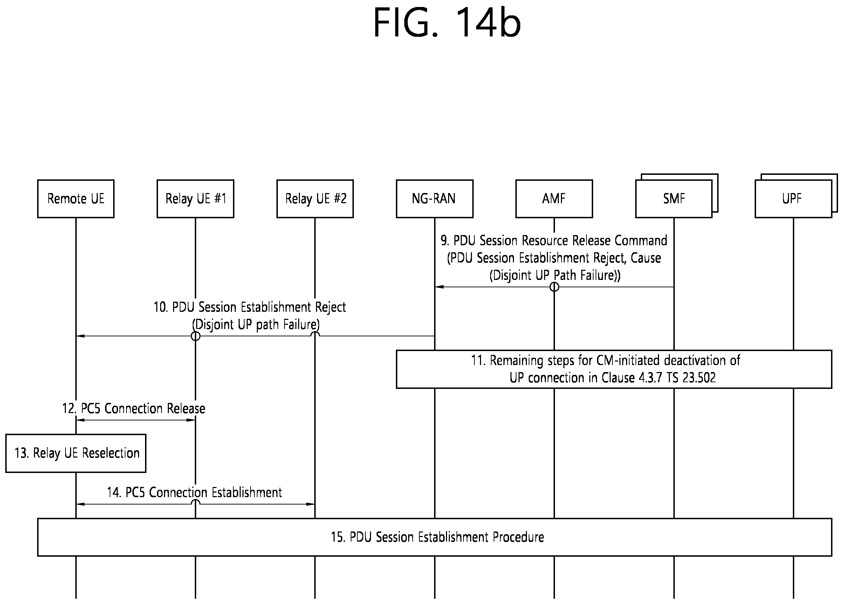

FIGS. 14a and 14b are exemplary diagrams showing a procedure according to the third embodiment.

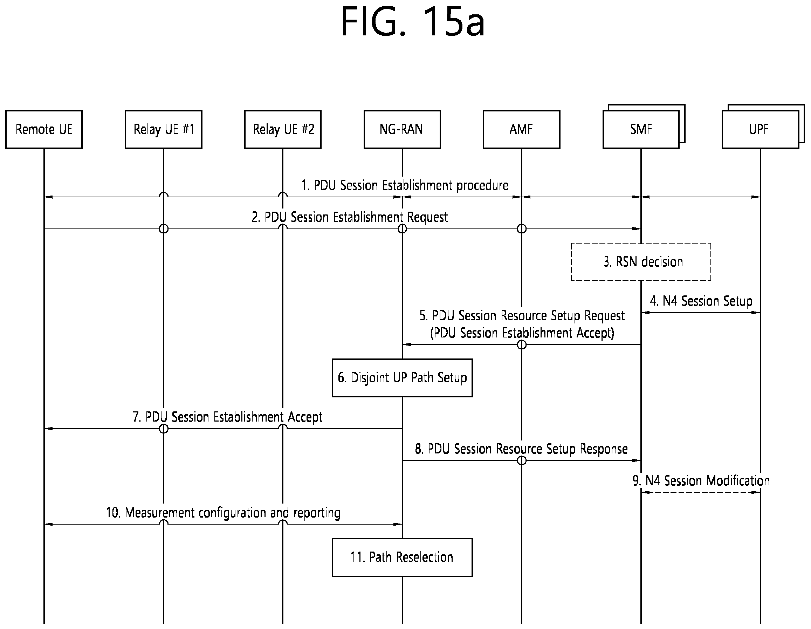

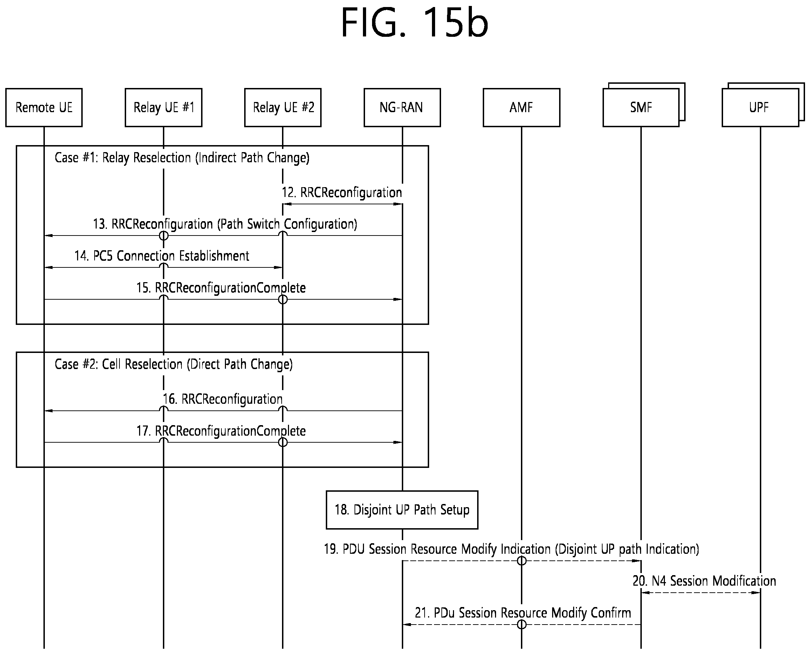

FIGS. 15a and 15b are exemplary diagrams showing a procedure according to the fourth embodiment.

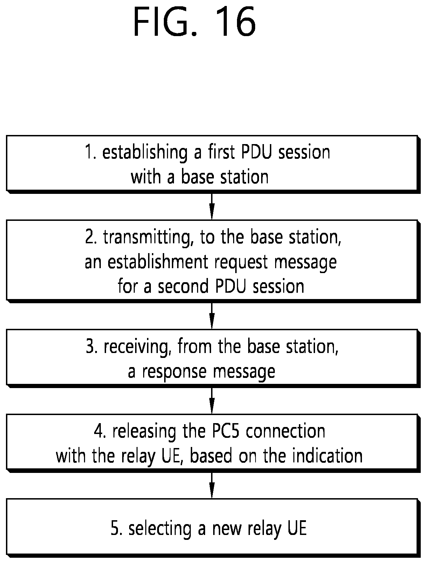

FIG. 16 shows the procedure of the remote UE for the disclosure of this specification.

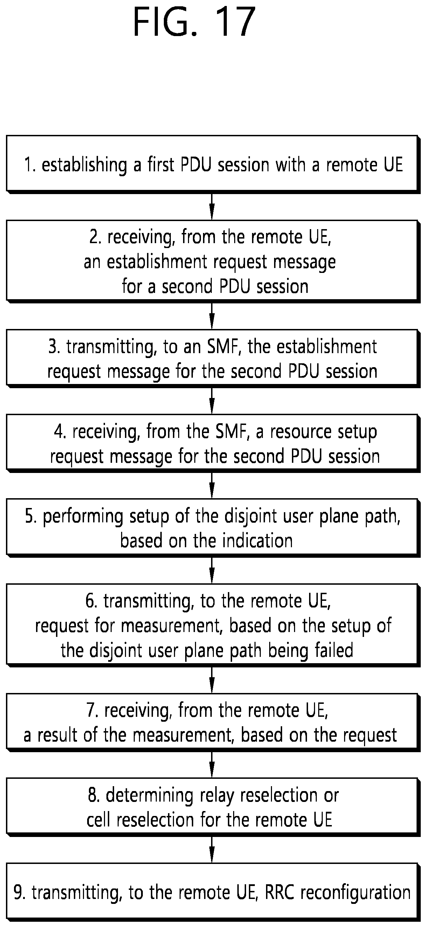

FIG. 17 shows the procedure of the base station for the disclosure of this specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

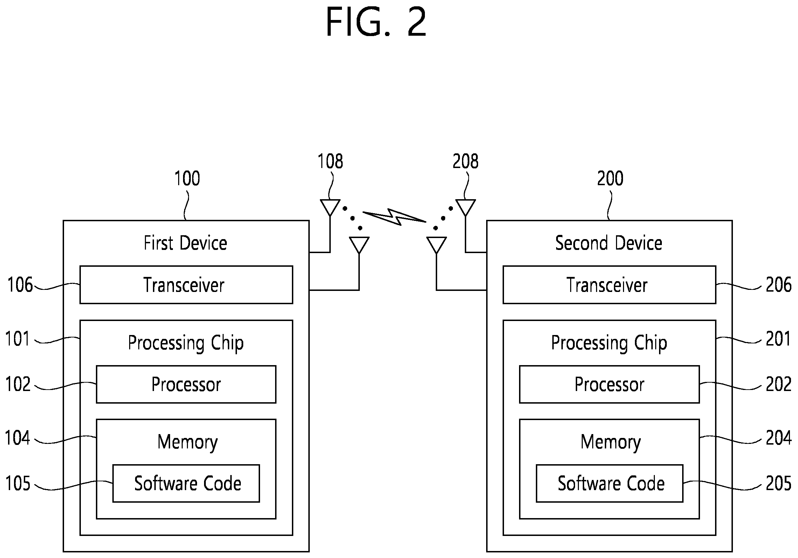

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

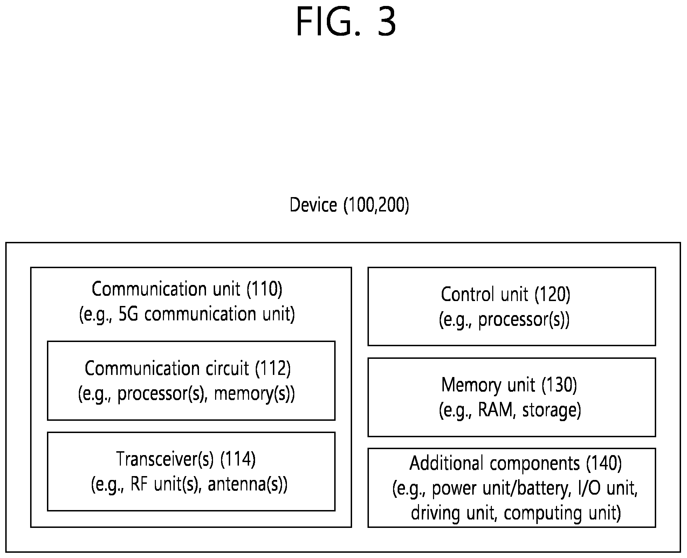

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

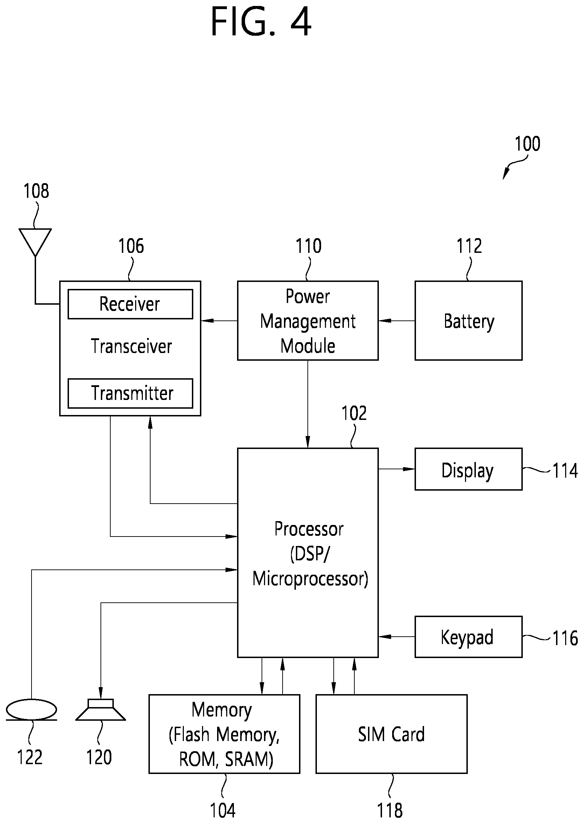

**FIG. 4** **shows an example of UE to which implementations of the present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

### <PDU session establishment procedure>

A PDU session establishment procedure is described. Section 4.3.2 of 3GPP TS 23.502 V16.3.0 (2019-12) can be referred.

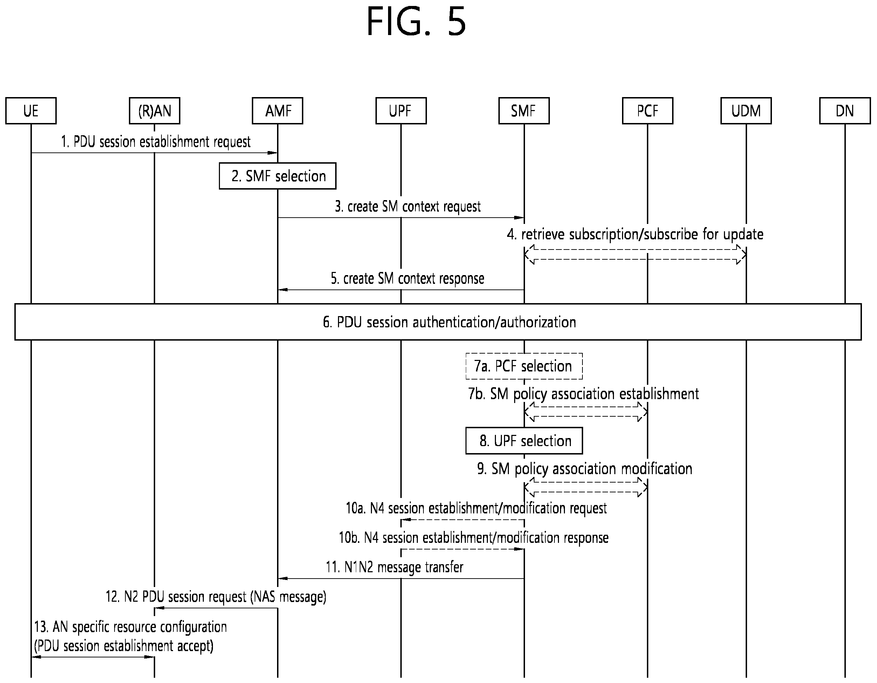

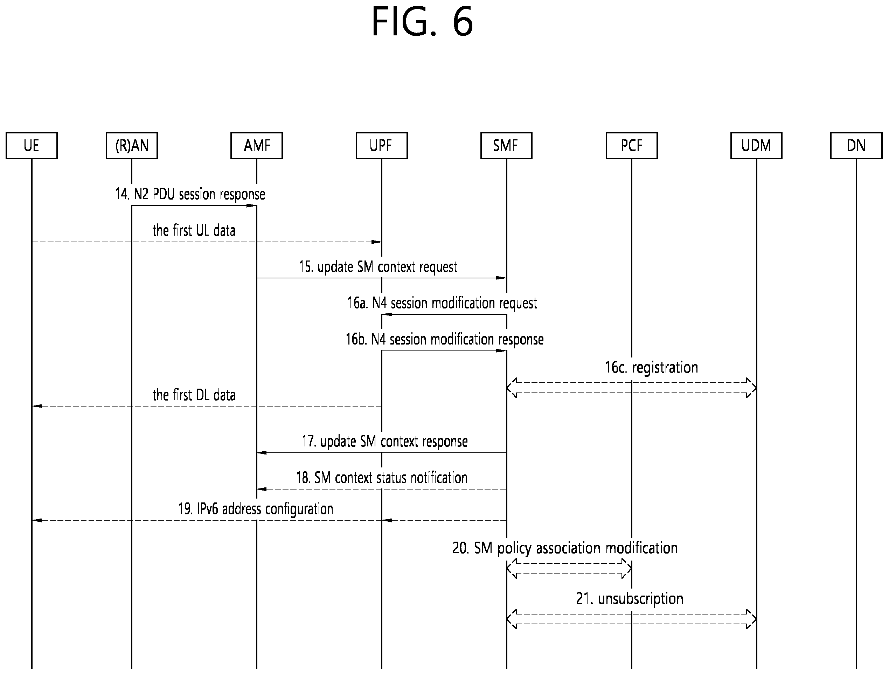

**FIGS. 5** **and** **6** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.

(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN,
- the SMF ID corresponding to the PDU session ID belongs to the HPLMN,

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g.,
Nsmf_PDUSession_CreateSMContext Response) or Update SM Context Response message (e.g.,
Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

### < Redundant PDU session>

To support highly reliable URLLC (Ultra-Reliable and Low Latency Communication) services, a UE (User Equipment) may establish two redundant PDU sessions over a 5G network. This may be used for applications requiring high reliability. The two PDU sessions may be managed by different network nodes. The same data may be transmitted through both PDU sessions.

The 5GS (5G System) may configure the user plane paths of the two redundant PDU sessions to be disjoint. The user's subscription data indicates whether the user is allowed to have redundant PDU sessions, and this information can be provided from the UDM (Unified Data Management) to the SMF (Session Management Function).

The RAN (Radio Access Network) supports dual connectivity, and there may be sufficient RAN coverage in the target area for dual connectivity. The UE may support dual connectivity. The core network UPF (User Plane Function) deployment aligns with the RAN deployment and may support redundant user plane paths. The underlying transport topology is consistent with the RAN and UPF deployments and may enable redundant user plane paths. The geographical distribution of physical network topology and functions may support redundant user plane paths to the extent deemed necessary by the operator. The operation of redundant user plane paths may be sufficiently independent to the level required by the operator.

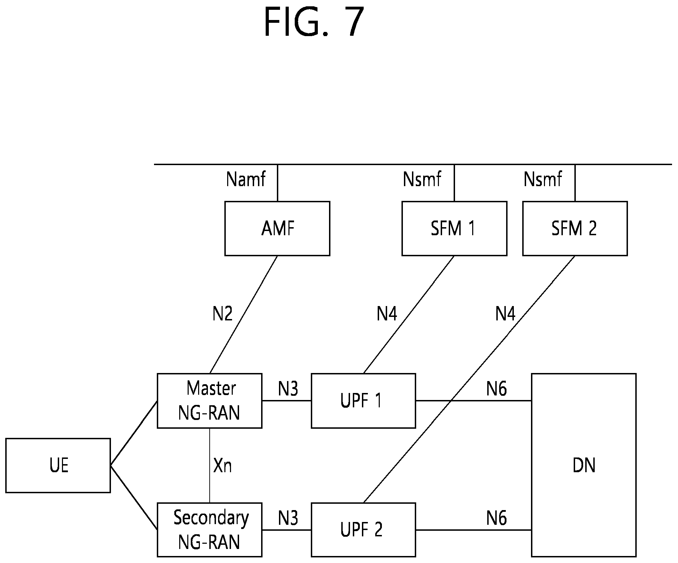

**FIG. 7** **illustrates an example of redundant user plane paths using dual connectivity.**

FIG. 7 illustrates an example of user plane resource configuration for redundant PDU sessions when redundant PDU sessions are implemented. One PDU session spans from the UE through the Master NG-RAN to UPF1, which acts as the PDU session anchor. The other PDU session spans from the UE through the Secondary NG-RAN to UPF2, which also serves as a PDU session anchor. The NG-RAN may realize redundant user plane resources for the two PDU sessions using either two NG-RAN nodes (Master NG-RAN and Secondary NG-RAN) or a single NG-RAN node. In both cases, there is a single N1 interface for the AMF.

Based on these two PDU sessions, two independent user plane paths may be established. Although traffic through UPF1 and UPF2 may be routed via different user plane nodes within the DN (Data Network), UPF1 and UPF2 may be connected to the same DN.

To establish two redundant PDU sessions and associate redundant traffic from the same application with these sessions, the UE Route Selection Policy (URSP) or UE-local configuration may be used.

When using URSP, redundant traffic from applications associated with redundant PDU sessions may be distinguished by two unique traffic descriptors in separate URSP rules. Since these traffic descriptors must have different DNNs, IP descriptors, or non-IP descriptors (e.g., MAC addresses, VLAN IDs), the two redundant PDU sessions may match the route selection descriptors of their respective URSP rules.

Redundant user plane configurations may be applied to both IP and Ethernet PDU sessions.

Support for redundant PDU sessions includes the following:
- The UE may initiate two redundant PDU sessions, and provide a distinct combination of DNN and S-NSSAI for each of the two redundant PDU sessions.
- The SMF determines whether to treat a PDU session as redundant. If dynamic PCC (Policy and Charging Control) is applied to the PDU session or a combination of S-NSSAI, DNN, user subscription, and SMF-local policy settings, this determination may be based on an indication that redundant PDU sessions must be provisioned by the PCF for the session. If a PDU session is treated as redundant, the SMF uses S-NSSAI and DNN to distinguish the redundant PDU sessions and determines the RSN (Redundancy Sequence Number) value, which indicates the redundant user plane requirements for PDU session of the NG-RAN.
- Operator configurations for UPF selection may ensure appropriate UPF choices for disjoint paths.
- When a PDU session is established or transitions to the CM-CONNECTED state is performed, the RSN parameter informs the NG-RAN that redundant user plane resources must be provided for the PDU session via dual connectivity. The RSN value reflects the redundant user plane requirements for the session. This request for redundant processing may be performed by indicating an RSN to the NG-RAN node on a per PDU session basis. PDU sessions with different RSN values may be realized by distinct redundant UP resources. Based on RSN and RAN configurations, the NG-RAN establishes dual connectivity to ensure end-to-end redundant paths. When the RSN parameter is set and there are multiple PDU sessions with different RSN values, this means that the Core Network (CN) requests dual connectivity setup and the user plane has configured the RSN parameter and the associated RAN configuration. When the RSN value is provided to the NG-RAN, the NG-RAN considers the RSN value when associating the PDU session with the NG-RAN UP.

The decision to establish dual connectivity may be made by the NG-RAN. The NG-RAN may consider additional requests for dual connectivity setup provided by the CN.
- Using the NG-RAN local configuration, the NG-RAN may decide whether the RAN resource setup request for a PDU session is satisfied by considering the user plane requirements indicated by the RSN parameters through the dual connectivity. If the RAN resource setup request for a PDU session can be performed by the RAN, the PDU session may be established even if the user plane requirements indicated by the RSN cannot be satisfied. If the NG-RAN decides that the request to establish RAN resources cannot be fulfilled, it rejects the request which ultimately triggers the SMF to reject the PDU session establishment for the UE. The decision for each PDU session may be made independently. For example, rejection of a PDU session request may not release a previously established PDU session. The RAN shall decide whether to notify the SMF when it can no longer maintain the RAN resources indicated by the RSN parameters, and the SMF shall use this to decide whether the PDU session should be released.
- For Ethernet PDU sessions, SMF changes UPF (PSA role) and Secondary NG-RAN is modified (or added/released) using Ethernet PDU session anchor relocation procedure.
- Charging records in SMF may reflect RSN information.
- RSN indication is delivered from Source NG-RAN to Target NG-RAN in case of handover.

### <Problems to be solved in the disclosure of this specification>

A method to support ProSe (Proximity based Services) in 5GS was discussed. A method to receive network connection services through UE-to-Network Relay was discussed. The UE-to-Network Relay may be a Layer-2 UE-to-Network Relay or a Layer-3 UE-to-Network Relay. For details, refer to TS 23.304 V17.3.0.

The UE may receive connection services from the network in the following ways:
- Direct Path (Direct Network Communication): The UE receives services directly from the network without going through the UE-to-Network Relay.
- Indirect Path (Indirect Network Communication): The UE indirectly receives services from the network through the UE-to-Network Relay.

Previously, the following scenarios were considered not possible:
- UE receives network connection service through one or more Layer-2 UE-to-Network Relays and simultaneously receives network connection service through direct path.
- UE receives network connection service through two or more Layer-2 UE-to-Network Relays.

Even when UE receives network connection service through Layer-2 UE-to-Network Relays, it may perform RRC and NAS operations with NG-RAN and core network (via Layer-2 UE-to-Network Relays). In the above scenarios, UE has multiple RRC connections and NAS connections through 3GPP access (e.g., Uu interface between UE and NG-RAN in case of direct path, and Uu interface between Layer-2 UE-to-Network Relay and NG-RAN in case of indirect path), which was not previously allowed.

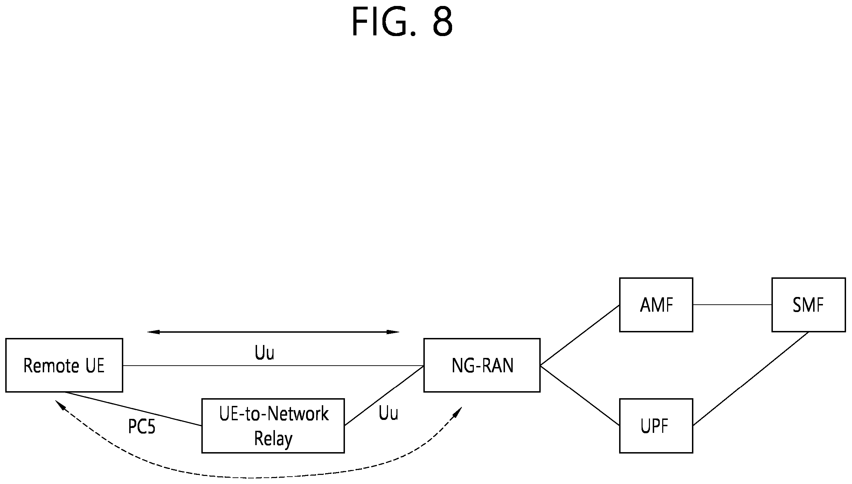

Scenarios in which UE receives service from network through multiple paths may be considered. FIGS. 8 to 11 illustrate scenarios in which a UE receives services from a network via two paths (Direct Path or Indirect Path).

**FIG. 8** **illustrates a scenario in which the Direct Path and the Indirect Path are served to the UE via one identical NG-RAN.**

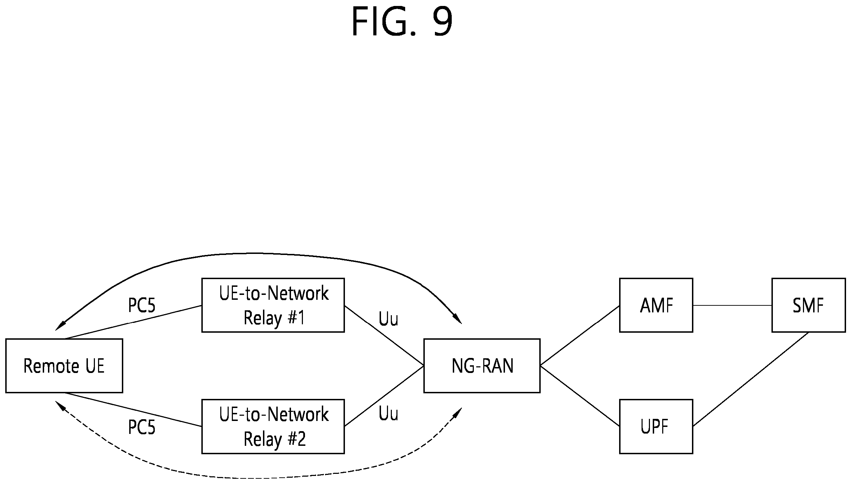

**FIG. 9** **illustrates a scenario in which two different Indirect Paths are served to the UE via one identical NG-RAN.**

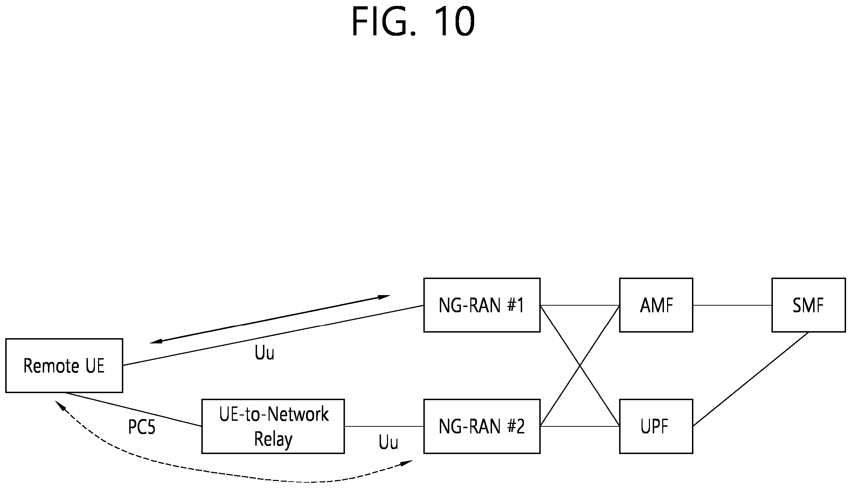

**FIG. 10** **illustrates a scenario in which the Direct Path and the Indirect Path are served to the UE via two different NG-RANs.**

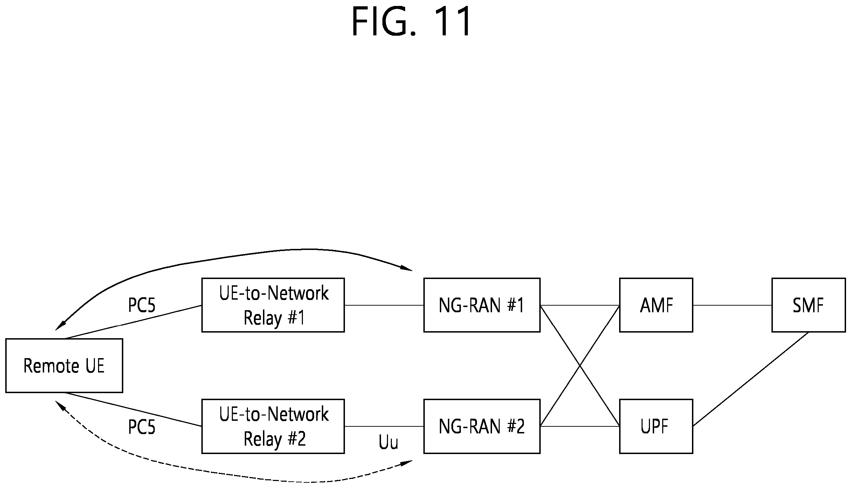

**FIG. 11** **illustrates a scenario in which two different Indirect Paths are served to the UE via two different NG-RANs.**

In FIGS. 8 to 11, it is assumed that for all paths (Direct Path or Indirect Path), the connection/communication between the UE and the network on the path is 3GPP access (e.g., Uu interface). For example, in the case of the Direct Path, the connection/communication between the UE and the network is made through 3GPP access. And, in the case of the Indirect Path, the connection/communication between the UE-to-Network Relay and the network is made through 3GPP access.

FIGS. 8 to 11 show two paths, but this may be extended to three or more paths.

In FIGS. 8 to 11, multiple paths are shown to be served through the same PLMN. However, multiple paths may be served through different PLMNs.

A UE using multiple paths may be assumed to support both non-roaming and roaming cases.

There is a discussion on multi-path transmission using one direct network communication path (Direct Path) via UE-to-network relay and one indirect network communication path (Indirect Path) for reliability or data rate improvement.

Multi-path support may improve the stability and throughput of communication. Multiple paths may be utilized simultaneously. Switching between multiple paths may also be possible.

A terminal may be connected to the same gNB using one Direct Path and one Indirect Path (Layer-2 UE-to-Network relay or Indirect Path through another UE). Here, the solution for Layer-2 UE-to-Network relay may be reused for another UE.

In this specification, if there is no special mention of the Indirect Path, it is assumed to be through Layer-2 UE-to-Network Relay by default.

In addition, to support DC (Dual connectivity)-based redundant transmission, the UE may include the PDU session Pair ID in the PDU Session Establishment Request message to create a PDU session for redundant transmission. For this purpose, see Clause 5.33.2.1 of TS 23.501 V17.5.0.

If the UE has knowledge of the PDU session pair information for the redundant PDU session, the UE may provide the PDU session pair information to the SMF, which may then provide this information to the NG-RAN, so that the NG-RAN can ultimately use this information for SN selection (and also gNB CU/DU selection). Then, two PDU sessions may be established independently without any constraints on the selected SMF.

When a UE releases one of the redundant PDU sessions and establishes a third PDU session, the PDU session pair information may be used to coordinate with the newly established PDU session.

The NG-RAN may receive RSN and PDU session pair ID values from the SMF for the PDU session for redundant transmission.

The redundant PDU session may be applied to multi-path to the Remote UE.

The direct path and the indirect path for the Remote UE may be assigned to two redundant PDU sessions each, thereby allocating/setting(setup) disjoint UP paths, thereby providing reliability enhancement to the Remote UE.

However, the NG-RAN may fail to allocate/setup disjoint UP paths for the two PDU sessions for redundant transmission. In order to allocate/setup a disjoint UP path again, a method is needed to change the indirect path by selecting a new Relay UE instead of the Relay UE used to configure the indirect path.

### <Disclosure of this specification>

NG-RAN may fail to allocate/setup a disjoint UP path for a PDU session (hereinafter referred to as a redundant PDU session) of a specific DNN and S-NSSAI combination for DC-based redundant transmission (refer to Clause 5.33.2.1 of TS 23.501 V17.5.0).

In this case, NG-RAN may inform the Remote UE of the above failure. Then, the remote UE may select a new Relay UE capable of multi-path transmission (e.g., if the Remote UE and Relay UE belong to the same base station). Then, NG-RAN may attempt to allocate/setup a disjoint UP path.

Alternatively, if the disjoint UP path allocation/setup for the redundant PDU session fails, the NG-RAN may perform a direct path reselection (Path Reselection) to change the direct path or the indirect path. Then, the NG-RAN may attempt to allocate/setup a disjoint UP path.

The disclosure of this specification may be applied when the terminal does not provide the PDU session pair ID and/or RSN information to the SMF. Or, the disclosure of this specification may be applied when the terminal provides the PDU session pair ID and/or RSN information to the SMF. It may be applied to both cases.

In this specification, the PDU session pair ID and/or RSN information may be information used for conventional DC-based redundant transmission, or may be newly defined information for multi-path transmission (e.g., MP-PDU Session Pair ID, MP-RSN). If PDU session pair ID and/or RSN information is newly defined information for multipath transmission, it may be added as part of route selection components in URSP (UE route selection policy) rule. Also, SMF may determine this information based on information such as DNN and S-NSSAI, local configuration, etc. Also, only one of PDU session pair ID and RSN information may be used.

The proposed method to support UE using multipath may be composed of a combination of one or more of the following actions/configurations/steps.

The proposed method to support UE using multipath assumes that network connection service is received through Layer-2 UE-to-Network Relay in case of Indirect Network Communication. However, the proposed method may be extended to the case where network connection service is received through Layer-3 UE-to-Network Relay in case of Indirect Network Communication.

As mentioned in Section 2, the path in this specification is assumed to be a path through NG-RAN (which may be only gNB, or both gNB and ng-eNB). However, the proposed method may also be extended to a path through non-3GPP access.

In the case of an indirect path, the contents of this specification may be applied not only to a one-hop case (e.g., a UE (or Remote UE) receives a service from the network through one UE-to-Network Relay) but also to a multi-hop case (e.g., a UE (or Remote UE) receives a service from the network through multiple UE-to-Network Relays).

In this specification, a path may mean a communication path, a routing path, a connection path, etc.

In this specification, UE (User Equipment) and terminal are used interchangeably for explanation. Also, UE-to-Network Relay, ProSe UE-to-Network Relay, Relay, Relay UE, UE-NW Relay, 5G ProSe UE-to-Network Relay, 5G ProSe UE-to-NW Relay, 5G ProSe UE-to-Network Relay UE, etc. are used interchangeably. Also, Remote UE, 5G Remote UE, etc. are used interchangeably.

In this specification, each path is assumed to have a different section between the UE and the NG-RAN, and the subsequent section, e.g., the section between the NG-RAN and the 5G CN, has no difference between the paths. However, it does not exclude that the path between the NG-RAN and the 5G CN (which is a control plane related path and/or a data plane related path) is different for each path.

The proposed operation can be interpreted as being performed or supported when the Remote UE uses the Relay UE for multipath purposes/purposes. One or more of the following assumptions/prerequisites may be required for the proposed operation.
- Remote UE and Relay UE may explicitly or implicitly recognize each other that Relay UE supports indirect path for Remote UE for multi-path purpose/purpose through Relay Discovery operation and/or PC5 unicast link formation/modification operation and/or message exchange with network.
- Base station may explicitly or implicitly recognize that Remote UE uses indirect path for multi-path purpose/purpose.

This specification mainly describes the proposed content. For Layer-2 UE-to-Network Relay-related operations and procedures, TS 23.304 V17.3.0, TS 38.300 V17.0.0, TS 38.331 V17.0.0 may be basically referred to.

### I. Separated UP path setup procedure using UE's relay reselection

The following drawings are created to explain specific examples of this specification. The names of specific devices or specific signals/messages/fields described in the drawings are provided for illustrative purposes, and therefore the technical features of this specification are not limited to the specific names used in the following drawings.

### 1. First Embodiment

**FIGS. 12a** **and** **12b** **are exemplary diagrams showing a procedure according** to the **first embodiment.**

If the NG-RAN fails to allocate/setup a disjoint UP path, the NG-RAN may notify the Remote UE of this. Then, the Remote UE may select a new Relay UE to change the indirect path. And, based on this, the NG-RAN may allocate/setup a disjoint UP path again. To this end, the NG-RAN may transmit an indication that the allocation/setup of the disjoint UP path has failed together with the PDU Session Establishment Accept message transmitted to the Remote UE.

Step 1: The Remote UE may perform a PDU session establishment procedure to establish the first PDU session for redundant transmission. The procedure may be performed via a direct path or an indirect path. In step 1 of the first embodiment, a PDU session establishment procedure may be performed via a direct path.

In this process, in order to create a redundant PDU session, the Remote UE may transmit to the network an RSN (Redundancy Sequence Number) and/or a PDU session pair ID value via a PDU Session Establishment Request message.

If the Remote UE does not transmit to the network an RSN and/or a PDU session pair ID value via the PDU Session Establishment Request message, the SMF may determine an RSN and/or a PDU session pair ID based on information such as local configuration, DNN, and S-NSSAI and transmit them to the NG-RAN. The NG-RAN may create a disjoint UP (User Plane) path based on the RSN and PDU session pair ID received from the SMF.

The above-mentioned contents in step 1 may be equally applied to Step 2-9.

Step 2: The Remote UE may initiate a PDU session establishment procedure to create a second PDU session for redundant transmission. The Remote UE may transmit a PDU session establishment request to the network.

The procedure may be performed via a direct path or an indirect path. In step 2 of the first embodiment, the PDU session establishment procedure may be performed via an indirect path.

In this process, in order to create a redundant PDU session, the Remote UE may transmit a PDU Session Establishment Request message including an RSN (Redundancy Sequence Number) and/or a PDU session pair ID value to the network.

Step 3: If the Remote UE does not transmit a PDU Session Establishment Request message including an RSN and/or a PDU session pair ID value in Step 2, the SMF may determine the RSN and/or the PDU session pair ID based on information such as local configuration, DNN, and S-NSSAI.

The SMF responsible for the first PDU session and the SMF responsible for the second PDU session may be the same or different.

Step 4: The SMF may create an N4 session for the PDU session with a UPF.

The UPF responsible for the first PDU session and the UPF responsible for the second PDU session may be the same or different.

Step 5: The SMF may request resource allocation/setup for the corresponding PDU session by transmitting a PDU Session Resource Setup Request to the NG-RAN through the AMF. At this time, the SMF may transmit the NAS message (i.e., the PDU Session Establishment Accept message) transmitted to the Remote UE together. At this time, the SMF may transmit one or more of the following information to the NG-RAN together:
- PDU session pair ID and/or Requested RSN sent by Remote UE in Step 2 or determined by SMF for the above PDU session in Step 3
- Information indicating that multipath transmission is requested
- Since two redundant PDU sessions must be connected to the same NG-RAN to support multipath transmission, a separate indication to inform the NG-RAN of this (for example, it may be an indication that the conventional method of utilizing (Rel-17) DC-based redundant transmission between two NG-RANs to allocate/setup disjoint UP paths should not be applied. Or it may be an indication that disjoint UP paths must be allocated/set within a single NG-RAN)

Step 6: The NG-RAN may allocate/setup separate UP paths (Disjoint UP paths) for the first and second PDU sessions based on the PDU session pair ID and RSN values received in Step 5.

In case of allocating/configuring disjoint UP paths within a single NG-RAN other than DC, when the NG-RAN is divided into CU and DU, and the CU is further divided into CU-CP and CU-UP, the CU-UP and DU may also allocate/configure resources according to the Requested RSN value. If the disjoint UP path cannot be allocated/configured based on the Requested RSN, the NG-RAN may select an RSN value (e.g., Used RSN) (other than the Requested RSN) that can allocate/configure the disjoint UP path.

In this process, the NG-RAN may first configure multipaths according to the local configuration, and then allocate/configure the disjoint UP path by allocating redundant PDU sessions to the direct path and the indirect path respectively (e.g., redundant transmission based on multipath).

Alternatively, the NG-RAN may utilize the conventional Rel-17 DC (Dual connectivity)-based transmission without configuring multipath according to the local configuration. For example, the NG-RAN may directly allocate/configure resources for the PDU session within the NG-RAN based on the PDU session-related information received from the SMF without utilizing the indirect path through the Relay UE. Alternatively, the NG-RAN may search and select a Secondary NG-RAN, and request the selected Secondary NG-RAN to allocate/configure resources according to the Requested RSN value. Then, a disjoint UP path may be allocated/configured between the two NG-RANs by utilizing the DC (Dual connectivity).

Alternatively, the NG-RAN may first attempt a method using multipath according to the local configuration, and if it is not successful or fails, attempt the conventional DC method. Or, conversely, the NG-RAN may first try the conventional DC method according to the local configuration, and then, if it is not successful or not feasible, try the multipath method.

Instead of or in addition to the local configuration, the NG-RAN may receive Assistance information from the core network to decide whether to attempt (or attempt first) the multipath-based redundancy transmission as described above, or to use (or first) the conventional Rel-17 DC-based redundancy transmission. The Assistance information that the core network sends to the NG-RAN may be one or more of the following:
- Multi-path preferred indication: It may inform the NG-RAN whether multi-path-based redundancy transmission is preferred. If the multi-path preferred indication is included in the Assistance information, the NG-RAN may preferentially attempt the multi-path-based redundancy transmission.
- RSN = v0: If the NG-RAN receives a separate RSN value (e.g. RSN = v0, v3, v4, ...) from the core network that is distinct from the RSN values used in the conventional Rel-17 DC-based redundancy transmission (e.g. RSN = v1, v2), the NG-RAN may apply multipath-based redundancy transmission for the corresponding PDU session.
- Multi-path allowed indication: If the NG-RAN determines that multipath transmission is allowed for the corresponding UE or the corresponding PDU session, it may apply multipath-based redundancy transmission.

The Assistance information that the core network sends to the NG-RAN may be configured based on subscriber information, or it may be information that the SMF has transmitted to the NG-RAN based on the URSP rule sent by the UE.

Step 7: The NG-RAN may transmit the resource information allocated/configured for the PDU session along with the PDU session establishment accept message to the Remote UE. If NG-RAN fails to allocate/setup a Disjoint UP Path in step 6, NG-RAN may also transmit an indication to the Remote UE that Disjoint UP Path allocation/setup has failed.

The procedure may be performed via a direct path or an indirect path. In step 7 of the first embodiment, a PDU session establishment accept message may be delivered to the Remote UE via an indirect path.

If the NG-RAN delivers an indication to the Remote UE that the allocation/setup of a Disjoint UP Path has failed via the indirect path, Relay UE #1 may also recognize the fact. In this case, Relay UE #1 may trigger the PC5 connection release with the Remote UE in step 10.

If the NG-RAN delivers an indication to the Remote UE that the allocation/setup of a Disjoint UP Path has failed, the Remote UE may temporarily suspend UL data transmission to the NG-RAN via Relay #1.

Step 8: The NG-RAN may inform the SMF of the resource information allocated/established for the PDU session. If, in Step 6, NG-RAN allocates/sets a different RSN value (e.g., Used RSN) instead of the Requested RSN sent by SMF for the above PDU session, NG-RAN may inform SMF of this fact. Also, if NG-RAN fails to allocate/set the Disjoint UP Path, NG-RAN may send an indication to SMF that Disjoint UP Path allocation/setup has failed.

Step 9: SMF may update N4 session information with UPF based on the information received in Step 8. If NG-RAN receives an indication that Disjoint UP Path allocation/setup has failed in Step 8, SMF may send an instruction to UPF to stop DL data transmission to NG-RAN.

If the SMF does not request the UPF to stop transmitting DL data to the NG-RAN, when the NG-RAN receives the DL data from the UPF, the NG-RAN may not immediately forward the DL data to the Remote UE, but may store the DL data until the Remote UE accesses the NG-RAN through a new Relay, or may simply discard it.

Step 10: If the Remote UE receives an indication from the NG-RAN in Step 7 that the allocation/setup of a Disjoint UP Path has failed, the Remote UE may know that it must select a new Relay instead of the currently connected Relay #1 in order to configure the Disjoint UP Path. Therefore, based on the indication, the Remote UE may release the PC5 connection with Relay #1.

Step 11: The Remote UE may select a new Relay UE, Relay UE #2, through the Relay UE reselection procedure. In the first embodiment, Relay UE #2 is selected.

Step 12: Remote UE may perform a new PC5 connection establishment procedure with Relay UE #2.

Step 13: Remote UE may attempt RRC connection establishment or path addition procedure toward NG-RAN through indirect path using Relay UE #2. NG-RAN may allocate/setup a disjoint UP path for the Remote UE by allocating different DU and/or CU-UP from the first PDU session for the indirect path through Relay #2.

After the procedure is performed, Remote UE may attempt UL data transmission toward NG-RAN, and NG-RAN may attempt DL data transmission toward Remote UE. UL data and DL data may be transmitted through redundant PDU sessions with disjoint UP path.

Step 14: If, in Step 8, the NG-RAN notifies the SMF that the allocation/setup of the Disjoint UP Path for two redundant PDU sessions has failed, the NG-RAN may notify the SMF that the allocation/setup of the Disjoint UP Path has succeeded by sending a PDU Session Resource Modify Indication to the SMF.

Step 15: If, in Step 9, the SMF requests the UPF to stop DL data transmission, the SMF may update the information about the N4 Session and notify the UPF that DL data transmission to the NG-RAN is possible again.

Step 16: The SMF may respond to the NG-RAN with a PDU Session Resource Modify Confirm message.

### 2. Second Embodiment

**FIGS. 13a** **and** **13b** **are exemplary diagrams illustrating a procedure according to the second embodiment.**

If NG-RAN fails to allocate/setup a Disjoint UP Path, NG-RAN may notify Remote UE of this. Then, remote UE may change the indirect path by selecting a new Relay. NG-RAN may allocate/setup a Disjoint UP Path again based on this.

To this end, NG-RAN notifies SMF of the fact that Disjoint UP Path allocation/setup failed, and SMF may execute a Deactivation procedure for the corresponding PDU session based on this. After this, if Remote UE changes the indirect path by creating a PC5 connection with a new Relay UE, Service Request procedure may be performed again to reactivate the deactivated PDU session. During this process, NG-RAN may attempt to allocate/setup a Disjoint UP Path for the PDU session.

Step 1: The Remote UE may perform a PDU session establishment procedure to establish the first PDU session for redundant transmission. The procedure may be performed via a direct path or an indirect path. In step 1, a PDU session establishment procedure may be performed via a direct path.

In this process, in order to create a redundant PDU session, the Remote UE may transmit to the network an RSN (Redundancy Sequence Number) and/or a PDU session pair ID value via a PDU Session Establishment Request message.

If the Remote UE does not transmit to the network an RSN and/or a PDU session pair ID value via the PDU Session Establishment Request message, the SMF may determine an RSN and/or a PDU session pair ID based on information such as local configuration, DNN, and S-NSSAI and transmit them to the NG-RAN. The NG-RAN may create a disjoint UP (User Plane) path based on the RSN and PDU session pair ID received from the SMF.

The above-mentioned contents in step 1 may be equally applied to Step 2-9.

Step 2: The Remote UE may initiate a PDU session establishment procedure to create a second PDU session for redundant transmission. The Remote UE may transmit a PDU session establishment request to the network.

The procedure may be performed via a direct path or an indirect path. In step 2, the PDU session establishment procedure may be performed via an indirect path.

In this process, in order to create a redundant PDU session, the Remote UE may transmit a PDU Session Establishment Request message including an RSN (Redundancy Sequence Number) and/or a PDU session pair ID value to the network.

Step 3: If the Remote UE does not transmit a PDU Session Establishment Request message including an RSN and/or a PDU session pair ID value in Step 2, the SMF may determine the RSN and/or the PDU session pair ID based on information such as local configuration, DNN, and S-NSSAI.

The SMF responsible for the first PDU session and the SMF responsible for the second PDU session may be the same or different.

Step 4: The SMF may create an N4 session for the PDU session with a UPF.

The UPF responsible for the first PDU session and the UPF responsible for the second PDU session may be the same or different.

Step 5: The SMF may request resource allocation/setup for the corresponding PDU session by transmitting a PDU Session Resource Setup Request to the NG-RAN through the AMF. At this time, the SMF may transmit the NAS message (i.e., the PDU Session Establishment Accept message) transmitted to the Remote UE together. At this time, the SMF may transmit one or more of the following information to the NG-RAN together:
- PDU session pair ID and/or Requested RSN sent by Remote UE in Step 2 or determined by SMF for the above PDU session in Step 3
- Information indicating that multipath transmission is requested
- Since two redundant PDU sessions must be connected to the same NG-RAN to support multipath transmission, a separate indication to inform the NG-RAN of this (for example, it may be an indication that the conventional method of utilizing (Rel-17) DC-based redundant transmission between two NG-RANs to allocate/setup disjoint UP paths should not be applied. Or it may be an indication that disjoint UP paths must be allocated/set within a single NG-RAN)

Step 6: The NG-RAN may allocate/setup separate UP paths (Disjoint UP paths) for the first and second PDU sessions based on the PDU session pair ID and RSN values received in Step 5.

In case of allocating/configuring disjoint UP paths within a single NG-RAN other than DC, when the NG-RAN is divided into CU and DU, and the CU is further divided into CU-CP and CU-UP, the CU-UP and DU may also allocate/configure resources according to the Requested RSN value. If the disjoint UP path cannot be allocated/configured based on the Requested RSN, the NG-RAN may select an RSN value (e.g., Used RSN) (other than the Requested RSN) that can allocate/configure the disjoint UP path.

In this process, the NG-RAN may first configure multipaths according to the local configuration, and then allocate/configure the disjoint UP path by allocating redundant PDU sessions to the direct path and the indirect path respectively (e.g., redundant transmission based on multipath).

Alternatively, the NG-RAN may utilize the conventional Rel-17 DC (Dual connectivity)-based transmission without configuring multipath according to the local configuration. For example, the NG-RAN may directly allocate/configure resources for the PDU session within the NG-RAN based on the PDU session-related information received from the SMF without utilizing the indirect path through the Relay UE. Alternatively, the NG-RAN may search and select a Secondary NG-RAN, and request the selected Secondary NG-RAN to allocate/configure resources according to the Requested RSN value. Then, a disjoint UP path may be allocated/configured between the two NG-RANs by utilizing the DC (Dual connectivity).

Alternatively, the NG-RAN may first attempt a method using multipath according to the local configuration, and if it is not successful or fails, attempt the conventional DC method. Or, conversely, the NG-RAN may first try the conventional DC method according to the local configuration, and then, if it is not successful or not feasible, try the multipath method.

Instead of or in addition to the local configuration, the NG-RAN may receive Assistance information from the core network to decide whether to attempt (or attempt first) the multipath-based redundancy transmission as described above, or to use (or first) the conventional Rel-17 DC-based redundancy transmission. The Assistance information that the core network sends to the NG-RAN may be one or more of the following:
- Multi-path preferred indication: It may inform the NG-RAN whether multi-path-based redundancy transmission is preferred. If the multi-path preferred indication is included in the Assistance information, the NG-RAN may preferentially attempt the multi-path-based redundancy transmission.
- RSN = v0: If the NG-RAN receives a separate RSN value (e.g. RSN = v0, v3, v4, ...) from the core network that is distinct from the RSN values used in the conventional Rel-17 DC-based redundancy transmission (e.g. RSN = v1, v2), the NG-RAN may apply multipath-based redundancy transmission for the corresponding PDU session.
- Multi-path allowed indication: If the NG-RAN determines that multipath transmission is allowed for the corresponding UE or the corresponding PDU session, it may apply multipath-based redundancy transmission.

The Assistance information that the core network sends to the NG-RAN may be configured based on subscriber information, or it may be information that the SMF has transmitted to the NG-RAN based on the URSP rule sent by the UE.

Step 7: NG-RAN may transmit resource information allocated/set for the PDU session along with a PDU Session Establishment Accept message to the Remote UE. This procedure may be performed via a direct path or an indirect path, and in step 7, a PDU Session Establishment Accept message may be transmitted to the Remote UE via an indirect path.

Step 8: The NG-RAN may inform the SMF of the resource information allocated/set for the PDU session. If, in Step 6, NG-RAN allocates/sets a different RSN value (e.g., Used RSN) instead of the Requested RSN sent by SMF for the above PDU session, NG-RAN may inform SMF of this fact. Also, if NG-RAN fails to allocate/set the Disjoint UP Path, NG-RAN may send an indication to SMF that Disjoint UP Path allocation/setup has failed.

Step 9: If the SMF receives an indication in Step 8 that the NG-RAN failed to allocate/setup a Disjoint UP Path, the SMF may decide to deactivate the corresponding PDU session. Accordingly, the SMF may request the UPF to delete the DL TNL (Transport Network Layer) address information to the NG-RAN or release the N4 session with the UPF.

Step 10: The SMF may request the release of the PDU session by sending a PDU Session Resource Release Command to the NG-RAN through the AMF. At this time, SMF may transmit the fact that the disjoint UP path allocation/establishment failure was received in Step 8 as a Cause value.

Step 11: The NG-RAN may release the resources allocated/established for the PDU session in Step 6 and notify the Remote UE of the fact that the resources were released. At this time, an indication that the disjoing UP path allocation/setup failed may be transmitted to the Remote UE together. This procedure may be performed through a direct path or an indirect path, and in Step 11, a PDU Session Establishment Accept message may be transmitted to the Remote UE through an indirect path.

If NG-RAN informs Remote UE via indirect path that disjoint UP path allocation/configuration failed, Relay UE #1 may also recognize this fact. In this case, Relay UE #1 may trigger PC5 connection release with Remote UE in Step 13.

Since NG-RAN has released the resources allocated/configured for the above PDU session, Remote UE may stop UL data transmission to NG-RAN via Relay UE #1.

Step 12: The remaining steps of CN-initiated deactivation procedure according to Clause 4.3.7 in TS 23.502 V17.5.0 may be executed.

Step 13: If the Remote UE receives an indication that the Disjoint UP Path allocation/setup failed from the NG-RAN in Step 11, the Remote UE may know that it should select a new Relay UE instead of the currently connected Relay UE #1 to configure the Disjoint UP Path. Therefore, it may proceed with the PC5 connection release with Relay UE #1.

Step 14: The Remote UE may select a new Relay UE through the Relay UE reselection procedure. In the second embodiment, Relay #2 is selected.

Step 15: The Remote UE may proceed with the new PC5 connection establishmnet procedure with Relay UE #2.

Step 16: The Remote UE may attempt to activate the UP connection for the second PDU session by transmitting a Service Request message to the network. During the Service Request process, the SMF may request the NG-RAN to allocate/setup a Disjoint UP Path for the second PDU session. If the NG-RAN successfully allocates/setups a Disjoint UP Path, the Remote UE may attempt to transmit UL data toward the NG-RAN, and the NG-RAN may attempt to transmit DL data toward the Remote UE. The UL data and DL data may be transmitted through a redundant PDU session with the Disjoint UP Path established(set).

### 3. Third Embodiment

**FIGS. 14a** **and** **14b** **are exemplary diagrams showing a procedure according to the third embodiment.**

If the NG-RAN fails to allocate/setup a disjoint UP path, the NG-RAN may notify the Remote UE of this. Then, the Remote UE may change the indirect path by selecting a new Relay UE, and based on this, the NG-RAN may allocate/setup a disjoint UP path again. To this end, the NG-RAN may notify the SMF of the fact that the disjoint UP path allocation/setup has failed, and based on this, the SMF may execute a deactivation procedure for the corresponding PDU session. Afterwards, the SMF may notify the Remote UE that the establishment of the corresponding PDU session has been rejected due to the failure of the disjoint UP path allocation/setup. Based on this, if the Remote UE changes the indirect path by establishing a PC5 connection with a new Relay UE, the Remote UE may execute the PDU session establishment procedure again. During this process, the NG-RAN may attempt to allocate/setup a disjoint UP path for the PDU session.

Step 1: The Remote UE may perform a PDU session establishment procedure to establish the first PDU session for redundant transmission. The procedure may be performed via a direct path or an indirect path. In step 1, a PDU session establishment procedure may be performed via a direct path.

In this process, in order to create a redundant PDU session, the Remote UE may transmit to the network an RSN (Redundancy Sequence Number) and/or a PDU session pair ID value via a PDU Session Establishment Request message.

If the Remote UE does not transmit to the network an RSN and/or a PDU session pair ID value via the PDU Session Establishment Request message, the SMF may determine an RSN and/or a PDU session pair ID based on information such as local configuration, DNN, and S-NSSAI and transmit them to the NG-RAN. The NG-RAN may create a disjoint UP (User Plane) path based on the RSN and PDU session pair ID received from the SMF.

The above-mentioned contents in step 1 may be equally applied to Step 2-9.

Step 2: The Remote UE may initiate a PDU session establishment procedure to create a second PDU session for redundant transmission. The Remote UE may transmit a PDU session establishment request to the network.

The procedure may be performed via a direct path or an indirect path. In step 2 of the first embodiment, the PDU session establishment procedure may be performed via an indirect path.

In this process, in order to create a redundant PDU session, the Remote UE may transmit a PDU Session Establishment Request message including an RSN (Redundancy Sequence Number) and/or a PDU session pair ID value to the network.

Step 3: If the Remote UE does not transmit a PDU Session Establishment Request message including an RSN and/or a PDU session pair ID value in Step 2, the SMF may determine the RSN and/or the PDU session pair ID based on information such as local configuration, DNN, and S-NSSAI.

The SMF responsible for the first PDU session and the SMF responsible for the second PDU session may be the same or different.

Step 4: The SMF may create an N4 session for the PDU session with a UPF.

The UPF responsible for the first PDU session and the UPF responsible for the second PDU session may be the same or different.

Step 5: The SMF may request resource allocation/setup for the corresponding PDU session by transmitting a PDU Session Resource Setup Request to the NG-RAN through the AMF. At this time, the SMF may transmit one or more of the following information to the NG-RAN together:
- PDU session pair ID and/or Requested RSN sent by Remote UE in Step 2 or determined by SMF for the above PDU session in Step 3
- Information indicating that multipath transmission is requested
- Since two redundant PDU sessions must be connected to the same NG-RAN to support multipath transmission, a separate indication to inform the NG-RAN of this (for example, it may be an indication that the conventional method of utilizing (Rel-17) DC-based redundant transmission between two NG-RANs to allocate/setup disjoint UP paths should not be applied. Or it may be an indication that disjoint UP paths must be allocated/set within a single NG-RAN)

Step 6: The NG-RAN may allocate/setup separate UP paths (Disjoint UP paths) for the first and second PDU sessions based on the PDU session pair ID and RSN values received in Step 5.

In case of allocating/configuring disjoint UP paths within a single NG-RAN other than DC, when the NG-RAN is divided into CU and DU, and the CU is further divided into CU-CP and CU-UP, the CU-UP and DU may also allocate/configure resources according to the Requested RSN value. If the disjoint UP path cannot be allocated/configured based on the Requested RSN, the NG-RAN may select an RSN value (e.g., Used RSN) (other than the Requested RSN) that can allocate/configure the disjoint UP path.

In this process, the NG-RAN may first configure multipaths according to the local configuration, and then allocate/configure the disjoint UP path by allocating redundant PDU sessions to the direct path and the indirect path respectively (e.g., redundant transmission based on multipath).

Alternatively, the NG-RAN may utilize the conventional Rel-17 DC (Dual connectivity)-based transmission without configuring multipath according to the local configuration. For example, the NG-RAN may directly allocate/configure resources for the PDU session within the NG-RAN based on the PDU session-related information received from the SMF without utilizing the indirect path through the Relay UE. Alternatively, the NG-RAN may search and select a Secondary NG-RAN, and request the selected Secondary NG-RAN to allocate/configure resources according to the Requested RSN value. Then, a disjoint UP path may be allocated/configured between the two NG-RANs by utilizing the DC (Dual connectivity).

Alternatively, the NG-RAN may first attempt a method using multipath according to the local configuration, and if it is not successful or fails, attempt the conventional DC method. Or, conversely, the NG-RAN may first try the conventional DC method according to the local configuration, and then, if it is not successful or not feasible, try the multipath method.

Instead of or in addition to the local configuration, the NG-RAN may receive Assistance information from the core network to decide whether to attempt (or attempt first) the multipath-based redundancy transmission as described above, or to use (or first) the conventional Rel-17 DC-based redundancy transmission. The Assistance information that the core network sends to the NG-RAN may be one or more of the following:
- Multi-path preferred indication: It may inform the NG-RAN whether multi-path-based redundancy transmission is preferred. If the multi-path preferred indication is included in the Assistance information, the NG-RAN may preferentially attempt the multi-path-based redundancy transmission.
- RSN = v0: If the NG-RAN receives a separate RSN value (e.g. RSN = v0, v3, v4, ...) from the core network that is distinct from the RSN values used in the conventional Rel-17 DC-based redundancy transmission (e.g. RSN = v1, v2), the NG-RAN may apply multipath-based redundancy transmission for the corresponding PDU session.
- Multi-path allowed indication: If the NG-RAN determines that multipath transmission is allowed for the corresponding UE or the corresponding PDU session, it may apply multipath-based redundancy transmission.

The Assistance information that the core network sends to the NG-RAN may be configured based on subscriber information, or it may be information that the SMF has transmitted to the NG-RAN based on the URSP rule sent by the UE.

Step 7: NG-RAN may notify SMF of the resource information allocated/configured for the above PDU session. If NG-RAN allocates/configures a different RSN value (i.e., Used RSN) instead of the Requested RSN sent by SMF for the above PDU session in Step 6, it may notify SMF of this. Also, if NG-RAN fails to allocate/configure Disjoint UP Path, it may notify SMF of this.

Step 8: If SMF receives an indication that NG-RAN fails to allocate/configure Disjoint UP Path in Step 7, SMF may decide to deactivate the corresponding PDU session. Therefore, SMF may request UPF to delete DL TNL address information to NG-RAN or release N4 session with UPF.

Step 9: The SMF may request the release of the PDU session by sending a PDU Session Resource Release Command to the NG-RAN through the AMF. At this time, the SMF may include the fact of the disjoint UP path allocation/setup failure received in Step 7 as the Cause value and transmit it.

In addition, the SMF may include an NAS message (e.g., a PDU Session Establishment Reject message) that notifies the Remote UE that the establishment request for the PDU session has been rejected. The NAS message may include an indication that the PDU session establishment request has been rejected due to the failure of the disjoint UP path allocation/establishment.

Step 10: The NG-RAN may release the resources allocated/established for the PDU session in Step 6, and may forward the PDU Session Establishment Reject message received in Step 9 to the Remote UE.

Step 11: The remaining steps of the CN-initiated deactivation procedure may be executed according to Clause 4.3.7 in TS 23.502 V17.5.0.

Step 12: The Remote UE may be informed through Step 10 that the establishment request for the PDU session was rejected due to the failure of the allocation/setup of the Disjoint UP Path from the network, and may be informed that a new Relay UE should be selected instead of the currently connected Relay UE #1 in order to configure the Disjoint UP Path. Therefore, the Remote UE may proceed with the PC5 release with Relay UE #1.

Step 13: The Remote UE may select a new Relay UE through the Relay UE reselection procedure. In the third embodiment, Relay UE #2 is selected.

Step 14: The Remote UE may perform a new PC5 connection establishment procedure with Relay UE #2.

Step 15: The Remote UE may request the establishment of a second PDU session for redundant transmission by sending a PDU Session Establishment Request message to the network again. During the PDU session establishment procedure, the SMF may request the NG-RAN to allocate/setup a disjoint UP path for the second PDU session. If the NG-RAN successfully allocates/setups a disjoint UP path, the Remote UE may attempt UL data transmission toward the NG-RAN, and the NG-RAN may attempt DL data transmission toward the Remote UE. UL data and DL data may be transmitted through redundant PDU sessions with disjoint UP paths set.

### II. Procedure for setup of disjoint UP paths using relay reselection (or cell reselection) of NG-RAN

### 1. Fourth embodiment

**FIGS. 15a** **and** **15b** **are exemplary diagrams showing a procedure according to the fourth embodiment.**

If NG-RAN fails to allocate/set a disjoint UP path, NG-RAN may select a new Uu cell or a new relay UE based on the measurement result sent by Remote UE. Then, the indirect/direct path is changed, and based on this, NG-RAN may attempt to allocate/set a disjoint UP path.

Step 1: The Remote UE may perform a PDU session establishment procedure to establish the first PDU session for redundant transmission. The procedure may be performed via a direct path or an indirect path.

In this process, in order to create a redundant PDU session, the Remote UE may transmit to the network an RSN (Redundancy Sequence Number) and/or a PDU session pair ID value via a PDU Session Establishment Request message.

If the Remote UE does not transmit to the network an RSN and/or a PDU session pair ID value via the PDU Session Establishment Request message, the SMF may determine an RSN and/or a PDU session pair ID based on information such as local configuration, DNN, and S-NSSAI and transmit them to the NG-RAN. The NG-RAN may create a disjoint UP (User Plane) path based on the RSN and PDU session pair ID received from the SMF.

The above-mentioned contents in step 1 may be equally applied to Step 2-9.

Step 2: The Remote UE may initiate a PDU session establishment procedure to create a second PDU session for redundant transmission. The Remote UE may transmit a PDU session establishment request to the network.

The procedure may be performed via a direct path or an indirect path. The PDU session establishment procedure may be performed via an indirect path.

In this process, in order to create a redundant PDU session, the Remote UE may transmit a PDU Session Establishment Request message including an RSN (Redundancy Sequence Number) and/or a PDU session pair ID value to the network.

Step 3: If the Remote UE does not transmit a PDU Session Establishment Request message including an RSN and/or a PDU session pair ID value in Step 2, the SMF may determine the RSN and/or the PDU session pair ID based on information such as local configuration, DNN, and S-NSSAI.

The SMF responsible for the first PDU session and the SMF responsible for the second PDU session may be the same or different.

Step 4: The SMF may create an N4 session for the PDU session with a UPF.

The UPF responsible for the first PDU session and the UPF responsible for the second PDU session may be the same or different.

Step 5: The SMF may request resource allocation/setup for the corresponding PDU session by transmitting a PDU Session Resource Setup Request to the NG-RAN through the AMF. At this time, the SMF may transmit the NAS message (i.e., the PDU Session Establishment Accept message) transmitted to the Remote UE together. At this time, the SMF may transmit one or more of the following information to the NG-RAN together:
- PDU session pair ID and/or Requested RSN sent by Remote UE in Step 2 or determined by SMF for the above PDU session in Step 3
- Information indicating that multipath transmission is requested
- Since two redundant PDU sessions must be connected to the same NG-RAN to support multipath transmission, a separate indication to inform the NG-RAN of this (for example, it may be an indication that the conventional method of utilizing (Rel-17) DC-based redundant transmission between two NG-RANs to allocate/setup disjoint UP paths should not be applied. Or it may be an indication that disjoint UP paths must be allocated/set within a single NG-RAN)

Step 6: The NG-RAN may allocate/setup separate UP paths (Disjoint UP paths) for the first and second PDU sessions based on the PDU session pair ID and RSN values received in Step 5.

In case of allocating/configuring disjoint UP paths within a single NG-RAN other than DC, when the NG-RAN is divided into CU and DU, and the CU is further divided into CU-CP and CU-UP, the CU-UP and DU may also allocate/configure resources according to the Requested RSN value. If the disjoint UP path cannot be allocated/configured based on the Requested RSN, the NG-RAN may select an RSN value (e.g., Used RSN) (other than the Requested RSN) that can allocate/configure the disjoint UP path.

In this process, the NG-RAN may first configure multipaths according to the local configuration, and then allocate/configure the disjoint UP path by allocating redundant PDU sessions to the direct path and the indirect path respectively (e.g., redundant transmission based on multipath).

Alternatively, the NG-RAN may utilize the conventional Rel-17 DC (Dual connectivity)-based transmission without configuring multipath according to the local configuration. For example, the NG-RAN may directly allocate/configure resources for the PDU session within the NG-RAN based on the PDU session-related information received from the SMF without utilizing the indirect path through the Relay UE. Alternatively, the NG-RAN may search and select a Secondary NG-RAN, and request the selected Secondary NG-RAN to allocate/configure resources according to the Requested RSN value. Then, a disjoint UP path may be allocated/configured between the two NG-RANs by utilizing the DC (Dual connectivity).

Alternatively, the NG-RAN may first attempt a method using multipath according to the local configuration, and if it is not successful or fails, attempt the conventional DC method. Or, conversely, the NG-RAN may first try the conventional DC method according to the local configuration, and then, if it is not successful or not feasible, try the multipath method.

Instead of or in addition to the local configuration, the NG-RAN may receive Assistance information from the core network to decide whether to attempt (or attempt first) the multipath-based redundancy transmission as described above, or to use (or first) the conventional Rel-17 DC-based redundancy transmission. The Assistance information that the core network sends to the NG-RAN may be one or more of the following:
- Multi-path preferred indication: It may inform the NG-RAN whether multi-path-based redundancy transmission is preferred. If the multi-path preferred indication is included in the Assistance information, the NG-RAN may preferentially attempt the multi-path-based redundancy transmission.
- RSN = v0: If the NG-RAN receives a separate RSN value (e.g. RSN = v0, v3, v4, ...) from the core network that is distinct from the RSN values used in the conventional Rel-17 DC-based redundancy transmission (e.g. RSN = v1, v2), the NG-RAN may apply multipath-based redundancy transmission for the corresponding PDU session.
- Multi-path allowed indication: If the NG-RAN determines that multipath transmission is allowed for the corresponding UE or the corresponding PDU session, it may apply multipath-based redundancy transmission.

The Assistance information that the core network sends to the NG-RAN may be configured based on subscriber information, or it may be information that the SMF has transmitted to the NG-RAN based on the URSP rule sent by the UE.

Step 7: NG-RAN may transmit resource information allocated/set for the PDU session along with a PDU Session Establishment Accept message to the Remote UE. This procedure may be performed via a direct path or an indirect path, and in step 7, a PDU Session Establishment Accept message may be transmitted to the Remote UE via an indirect path.

Step 8: The NG-RAN may inform the SMF of the resource information allocated/set for the PDU session. If, in Step 6, NG-RAN allocates/sets a different RSN value (e.g., Used RSN) instead of the Requested RSN sent by SMF for the above PDU session, NG-RAN may inform SMF of this fact. Also, if NG-RAN fails to allocate/set the Disjoint UP Path, NG-RAN may send an indication to SMF that Disjoint UP Path allocation/setup has failed.

Step 9: SMF may update N4 session information with UPF based on the information received in Step 8. If NG-RAN receives an indication that Disjoint UP Path allocation/setup has failed in Step 8, SMF may send an instruction to UPF to stop DL data transmission to NG-RAN.

If the SMF does not request the UPF to stop transmitting DL data to the NG-RAN, when the NG-RAN receives the DL data from the UPF, the NG-RAN may not forward the DL data to the Remote UE right away, but may store the DL data until the Remote UE accesses the NG-RAN through a new Relay UE (e.g., in case of Indirect Path Change) or through a new Uu cell (e.g., in case of Direct Path Change), or may simply discard the DL data.

Step 10: The remote UE may receive a measurement configuration from the NG-RAN. Then, the remote UE may perform a measurement that can be utilized for relay reselection and/or Uu cell reselection according to the instructions included in the measurement configuration and transmit the result to the NG-RAN.

For example, the NG-RAN may request the remote UE to perform a measurement that can be utilized for relay reselection and/or Uu cell reselection. The NG-RAN may receive, from the remote UE, the result of the measurement.

This process may be performed before Step 10.

Step 11: The NG-RAN may select a new relay UE or a new Uu cell for which a disjoint UP path can be allocated/configured based on the measurement result received from the remote UE in Step 10.

The NG-RAN may perform path reselection as follows:
- If NG-RAN changes only the indirect path by selecting a new Relay UE while maintaining the direct path, Steps 12-15 may be performed.
- If NG-RAN changes the direct path by selecting a new Uu cell while maintaining the indirect path, Steps 16 and 17 may be performed.

Step 12: NG-RAN may select a new Relay UE to change the indirect path. Relay #2 may be selected. NG-RAN may send RRCReconfiguration message to Relay #2. The RRCReconfiguration message may include information required to serve Remote UE, such as PC5 Relay RLC channel configuration, L2 ID, local ID, etc.

Step 13: NG-RAN may send RRCReconfiguration message including Path Switch Configuration to request Remote UE to change to Relay UE #2. Path Switch Configuration may include ID of newly selected Relay UE. Path Switch Configuration may include an indication indicating relay reselection to a newly selected relay UE.

Step 14: Remote UE may perform a new PC5 connection establishment procedure with Relay UE #2.

Step 15: Remote UE may notify NG-RAN that it has connected via a new relay UE by sending RRCReconfiguration Complete message through Relay UE #2.

Step 16: NG-RAN may select a new Uu cell to change the direct path. NG-RAN may request the Remote UE to change the direct path to a new Uu cell by sending an RRCReconfiguration message including information about the new Uu cell. The RRCReconfiguration message may include an indication indicating cell reselection to a new Uu cell.

The new Uu cell may be managed by a DU (Distributed Unit) of NG-RAN. The serving cell of the remote UE before cell reselection and the new Uu cell may be managed by the NG-RAN.

Step 17: After the Remote UE moves to the new Uu cell, it may notify the NG-RAN that it has accessed through the new Uu cell by sending an RRCReconfiguration Complete message.

Step 18: i) For the indirect path through Relay UE #2 or ii) For the direct path through the new Uu cell, the NG-RAN may allocate/setup a disjoint UP path for the Remote UE by allocating DUs and/or CU-UPs different from the first PDU session.

After the procedure is performed, the Remote UE may attempt to transmit UL data toward the NG-RAN, and the NG-RAN may attempt to transmit DL data toward the Remote UE. The UL data and DL data may be transmitted through the redundant PDU session with the disjoint UP path set.

Instead of performing step 7/step 8 as above and performing reselection of Uu cell/relay UE of terminal, the base station may perform step 10-17 without performing step 7/8. After successfully completing resource setup by performing step 10-17, the base station may perform step 7/8. In this case, step 19-21 may not be performed.

Step 19: If, in step 8, NG-RAN notifies SMF that disjoint UP path allocation/configuration for two redundant PDU sessions failed, NG-RAN may notify SMF that disjoint UP path allocation/configuration was successful again by sending PDU Session Resource Modify Indication to SMF.

Step 20: If SMF requested UPF to stop DL data transmission in Step 9, SMF may notify UPF again that DL data transmission to NG-RAN is possible while updating information about N4 session.

Step 21: SMF may respond to NG-RAN with PDU Session Resource Modify Confirm message.

The above drawings may be executed individually or together with other drawings.

**FIG. 16** **shows the procedure of the remote UE for the disclosure of this specification.**
1. The remote UE may establish a first PDU (Packet Data Unit) session with a base station.
2. The remote UE may transmit, to the base station, an establishment request message for a second PDU session.
   One of the first PDU session and the second PDU session may be for a direct path between the remote UE and the base station, and the other of the first PDU session and the second PDU session may be for an indirect path between the remote UE and the base station via a PC5 (Sidelink) connection with a relay UE.
3. The remote UE may receive, from the base station, a response message.

The response message may include an establishment accept message for the second PDU session.

The response message may include an indication that the setup of a disjoint user plane path for the first PDU session and the second PDU session has failed.

The disjoint user plane path may be for redundant transmission via the first PDU session and the second PDU session.

4. The remote UE may release the PC5 connection with the relay UE, based on the indication.

5. The remote UE may select a new relay UE.

The establishment request message for the second PDU session may include at least one of RSN (Redundancy Sequence Number) and PDU session pair ID.

The remote UE may establish a new PC5 connection with the new relay UE.

The remote UE may perform data transmission and reception using the first PDU session and the second PDU session with the base station.

**FIG. 17** **shows the procedure of the base station for the disclosure of this specification.**
1. The base station may establish a first PDU (Packet Data Unit) session with a remote UE (User Equipment).
2. The base station may receive, from the remote UE, an establishment request message for a second PDU session.
   One of the first PDU session and the second PDU session may be for a direct path between the remote UE and the base station, and the other of the first PDU session and the second PDU session may be for an indirect path between the remote UE and the base station via a PC5 (Sidelink) connection with a relay UE.
**3.** The base station may transmit, to an SMF (Session Management Function), the establishment request message for the second PDU session.
4. The base station may receive, from the SMF, a resource setup request message for the second PDU session.

The resource setup request message may include an indication to setup disjoint user plane path for the first PDU session and the second PDU session.

The disjoint user plane path may be for redundant transmission via the first PDU session and the second PDU session.

5. The base station may perform setup of the disjoint user plane path, based on the indication.

6. The base station may transmit, to the remote UE, request for measurement, based on the setup of the disjoint user plane path being failed.

7. The base station may receive, from the remote UE, a result of the measurement, based on the request.

8. The base station may determine relay reselection or cell reselection for the remote UE, based on the result of the measurement.

9. The base station may transmit, to the remote UE, RRC (Radio Resource Control) reconfiguration.

Based on the base station determining relay reselection, the RRC reconfiguration may include an indication for relay reselection to a new relay UE and an ID of the new relay UE.

Based on the base station determining cell reselection, the RRC reconfiguration may include an indication for cell reselection to a new cell and information for the new cell.

The new cell may be managed by DU (distributed Unit) of the base station.

The resource setup request message for the second PDU session may include information for requesting multi-path transmission.

The resource setup request message for the second PDU session may include at least one of RSN (Redundancy Sequence Number) and PDU session pair ID.

The base station may re-perform setup of the disjoint user plane path.

The base station may perform data transmission and reception using the first PDU session and the second PDU session with the remote UE.

Hereinafter, an apparatus for performing communication according to some embodiments of the present specification will be described.

For example, the apparatus may include a processor, a transceiver, and a memory.

For example, a processor may be configured to be operably coupled with a memory and a processor.

The processor may perform: establishing a first PDU (Packet Data Unit) session with a base station; transmitting, to the base station, an establishment request message for a second PDU session; wherein one of the first PDU session and the second PDU session is for a direct path between the remote UE and the base station, and the other of the first PDU session and the second PDU session is for an indirect path between the remote UE and the base station via a PC5 (Sidelink) connection with a relay UE, receiving, from the base station, a response message; wherein the response message includes an establishment accept message for the second PDU session, wherein the response message includes an indication that the setup of a disjoint user plane path for the first PDU session and the second PDU session has failed, wherein the disjoint user plane path is for redundant transmission via the first PDU session and the second PDU session, releasing the PC5 connection with the relay UE, based on the indication; selecting a new relay UE.

Hereinafter, a processor for providing communication according to some embodiments of the present specification will be described.

The processor is configured to: establishing a first PDU (Packet Data Unit) session with a base station; transmitting, to the base station, an establishment request message for a second PDU session; wherein one of the first PDU session and the second PDU session is for a direct path between the remote UE and the base station, and the other of the first PDU session and the second PDU session is for an indirect path between the remote UE and the base station via a PC5 (Sidelink) connection with a relay UE, receiving, from the base station, a response message; wherein the response message includes an establishment accept message for the second PDU session, wherein the response message includes an indication that the setup of a disjoint user plane path for the first PDU session and the second PDU session has failed, wherein the disjoint user plane path is for redundant transmission via the first PDU session and the second PDU session, releasing the PC5 connection with the relay UE, based on the indication; selecting a new relay UE.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: establishing a first PDU (Packet Data Unit) session with a base station; transmitting, to the base station, an establishment request message for a second PDU session; wherein one of the first PDU session and the second PDU session is for a direct path between the remote UE and the base station, and the other of the first PDU session and the second PDU session is for an indirect path between the remote UE and the base station via a PC5 (Sidelink) connection with a relay UE, receiving, from the base station, a response message; wherein the response message includes an establishment accept message for the second PDU session, wherein the response message includes an indication that the setup of a disjoint user plane path for the first PDU session and the second PDU session has failed, wherein the disjoint user plane path is for redundant transmission via the first PDU session and the second PDU session, releasing the PC5 connection with the relay UE, based on the indication; selecting a new relay UE.

The present specification may have various effects.

For example, according to the procedure disclosed in this specification, even if the disjoint UP path allocation/setup fails, the disjoint UP path allocation/setup can be performed again by changing the direct path/indirect path through relay reselection of the remote UE or path reselection of the NG-RAN.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a remote UE (User Equipment), comprising:
establishing a first PDU (Packet Data Unit) session with a base station;
transmitting, to the base station, an establishment request message for a second PDU session;
wherein one of the first PDU session and the second PDU session is for a direct path between the remote UE and the base station, and the other of the first PDU session and the second PDU session is for an indirect path between the remote UE and the base station via a PC5 (Sidelink) connection with a relay UE,
receiving, from the base station, a response message;
wherein the response message includes an establishment accept message for the second PDU session,
wherein the response message includes an indication that the setup of a disjoint user plane path for the first PDU session and the second PDU session has failed,
wherein the disjoint user plane path is for redundant transmission via the first PDU session and the second PDU session,
releasing the PC5 connection with the relay UE, based on the indication;
selecting a new relay UE.

2. The method of claim 1,
wherein the establishment request message for the second PDU session includes at least one of RSN (Redundancy Sequence Number) and PDU session pair ID.

3. The method of claim 1 or claim 2, further comprising:
establishing a new PC5 connection with the new relay UE.

4. The method of one of the claims 1 to 3, further comprising:
performing data transmission and reception using the first PDU session and the second PDU session with the base station.

5. A remote UE (User Equipment), to perform communication, comprising:
a transceiver; and
a processor,
wherein the processor performs operation that is a method of one of the claims 1 to 4.

6. A method for performing communication, performed by a base station, comprising:
establishing a first PDU (Packet Data Unit) session with a remote UE (User Equipment);
receiving, from the remote UE, an establishment request message for a second PDU session;
wherein one of the first PDU session and the second PDU session is for a direct path between the remote UE and the base station, and the other of the first PDU session and the second PDU session is for an indirect path between the remote UE and the base station via a PC5 (Sidelink) connection with a relay UE,
transmitting, to an SMF (Session Management Function), the establishment request message for the second PDU session;
receiving, from the SMF, a resource setup request message for the second PDU session;
wherein the resource setup request message includes an indication to setup disjoint user plane path for the first PDU session and the second PDU session,
wherein the disjoint user plane path is for redundant transmission via the first PDU session and the second PDU session,
performing setup of the disjoint user plane path, based on the indication;
transmitting, to the remote UE, request for measurement, based on the setup of the disjoint user plane path being failed;
receiving, from the remote UE, a result of the measurement, based on the request;
determining relay reselection or cell reselection for the remote UE, based on the result of the measurement;
transmitting, to the remote UE, RRC (Radio Resource Control) reconfiguration,
wherein, based on the base station determining relay reselection, the RRC reconfiguration includes an indication for relay reselection to a new relay UE and an ID of the new relay UE,
wherein, based on the base station determining cell reselection, the RRC reconfiguration includes an indication for cell reselection to a new cell and information for the new cell.

7. The method of claim 6,
wherein the new cell is managed by DU (distributed Unit) of the base station.

8. The method of claim 6 or claim 7,
wherein the resource setup request message for the second PDU session includes information for requesting multi-path transmission.

9. The method of one of the claims 6 to 8,
wherein the resource setup request message for the second PDU session includes at least one of RSN (Redundancy Sequence Number) and PDU session pair ID.

10. The method of one of the claims 6 to 9, further comprising:
re-performing setup of the disjoint user plane path.

11. The method of one of the claims 6 to 10, further comprising:
performing data transmission and reception using the first PDU session and the second PDU session with the remote UE.

12. A base station, to perform communication, comprising:
a transceiver; and
a processor,
wherein the processor performs operation that is a method of one of the claims 6 to 11.

13. An apparatus in mobile communication, comprising:
at least one processor; and
at least one memory storing instructions and operably electrically connectable with the at least one processor,
wherein, based on the instructions being operated by the at least one processor, the instructions perform operation that is a method of one of the claims 1 to 4.

14. A non-volatile computer readable storage medium having recorded instructions,
wherein the instructions, based on being executed by one or more processors, cause the one or more processors to perform operation that is a method of one of the claims 1 to 4.
